(19) Europäisches Patentamt
European Patent Office
Office européen des brevets

(11) EP 3 627 754 A1

(12) # DEMANDE DE BREVET EUROPEEN

(43) Date de publication:
**25.03.2020 Bulletin 2020/13**

(51) Int Cl.:
***H04L 9/00*** (2006.01) ***H04L 9/06*** (2006.01)
***H04L 9/32*** (2006.01)

(21) Numéro de dépôt: **19197584.6**

(22) Date de dépôt: **16.09.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **24.09.2018 FR 1858642**

(71) Demandeur: **IDEMIA France**
**92400 Courbevoie (FR)**

(72) Inventeurs:
- **RONDEPIERRE, Franck**
**92700 Courbevoie (FR)**
- **PIRET, Gilles**
**92700 Courbevoie (FR)**

(74) Mandataire: **Jacobacci Coralis Harle**
**32, rue de l'Arcade**
**75008 Paris (FR)**

(54) **PROCÉDÉ DE PRODUCTION D'UN CODE D'AUTHENTIFICATION ET DISPOSITIF DE TRAITEMENT CRYPTOGRAPHIQUE ASSOCIÉ**

(57) Dans un procédé de production d'un code d'authentification (T) associé à des données comprenant une pluralité de blocs de données ordonnés ($C_i$), un mot de sortie ($X_{m+i}$) est déterminé, pour chaque bloc de données ($C_i$), en fonction d'un premier produit obtenu par multiplication d'un mot de combinaison ($X_{m+i-1} \oplus C_i$) par un multiplicateur (H), le mot de combinaison étant obtenu par combinaison par ou exclusif d'un mot d'entrée ($X_{m+i-1}$) et du bloc de données concerné ($C_i$).

Le procédé comprend une étape (E4) de détermination d'un mot de masquage (M) et une étape (E6) de détermination d'un mot correctif (P) égal à la combinaison par ou exclusif du mot de masquage (M) et d'un second produit (M.H) obtenu par multiplication du mot de masquage (M) par le multiplicateur (H).

Pour chaque bloc de données ($C_i$), le mot de sortie ($X_{m+i}$) est déterminé au moyen d'une combinaison par ou exclusif d'une pluralité de données incluant le premier produit associé à ce bloc de données ($C_i$) et le mot correctif (P).

Un dispositif de traitement cryptographique associé est également décrit.

Fig.3

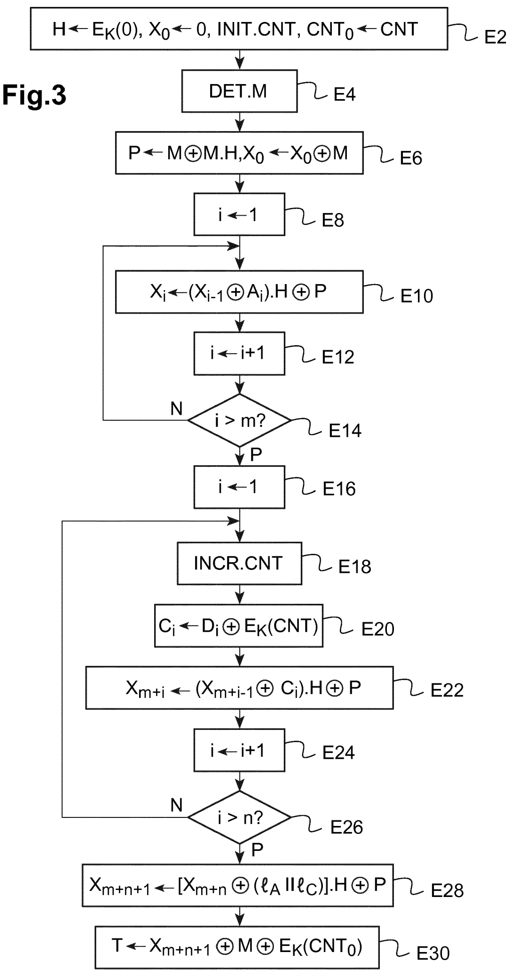


EP 3 627 754 A1

## Description

DOMAINE TECHNIQUE AUQUEL SE RAPPORTE L'INVENTION

La présente invention concerne de manière générale le domaine des algorithmes cryptographiques de chiffrement authentifié.

Elle concerne plus particulièrement un procédé de production d'un code d'authentification et un dispositif de traitement cryptographique associé.

ARRIERE-PLAN TECHNOLOGIQUE

On connaît des algorithmes cryptographiques de chiffrement authentifié tels que l'algorithme dénommé GCM (pour *"Galois Counter Mode"*).

Dans de tels algorithmes cryptographiques, on associe un algorithme de chiffrement par blocs, qui génère des données chiffrées comprenant une pluralité de blocs de données ordonnés, et un algorithme de production d'un code d'authentification associé à ces données chiffrées.

On prévoit par exemple pour ce faire dans le cadre de l'algorithme GCM que, pour chaque bloc de données, un mot de sortie est déterminé en fonction d'un premier produit obtenu par multiplication (dans le corps de Galois concerné) d'un mot de combinaison par un multiplicateur, ce mot de combinaison étant lui-même obtenu par combinaison par ou exclusif d'un mot d'entrée et du bloc de données concerné.

OBJET DE L'INVENTION

Dans ce contexte, la présente invention propose un procédé de production d'un code d'authentification associé à des données (par exemple des données chiffrées) comprenant une pluralité de blocs de données ordonnés, dans lequel, pour chaque bloc de données, un mot de sortie est déterminé en fonction d'un premier produit obtenu par multiplication d'un mot de combinaison par un multiplicateur, le mot de combinaison étant obtenu par combinaison par ou exclusif d'un mot d'entrée et du bloc de données concerné, caractérisé en ce qu'il comprend une étape de détermination d'un mot de masquage et une étape de détermination d'un mot correctif égal à la combinaison par ou exclusif du mot de masquage et d'un second produit obtenu par multiplication du mot de masquage par le multiplicateur, et en ce que, pour chaque bloc de données, le mot de sortie est déterminé au moyen d'une combinaison par ou exclusif d'une pluralité de données incluant le premier produit associé à ce bloc de données et le mot correctif.

En effet, les inventeurs se sont rendu compte que les algorithmes de chiffrement authentifié présentés en introduction pouvaient être l'objet d'attaques par canal auxiliaire visant à obtenir le multiplicateur afin de pouvoir générer ultérieurement de faux codes d'authentification.

Le procédé proposé ci-dessus permet de manipuler les données sous forme masquée (au moins par le mot de masquage). L'utilisation du mot correctif (et notamment son application lors de la détermination du mot de sortie) permet par ailleurs de conserver le masque inchangé tout au long du procédé, malgré l'utilisation d'une multiplication (qui impliquerait en théorie une mise à jour du masque par multiplication, ce qui représente un coût calculatoire important).

On note que la multiplication mentionnée ici est une multiplication dans un corps de Galois, précisément ici dans le corps de Galois de cardinal $2^l$, où l est la longueur en bits de chaque bloc de données précité (et/ou des mots d'entrée et/ou de mots de sortie et/ou du multiplicateur et/ou du mot correctif et/ou du code d'authentification).

D'autres caractéristiques envisageables à titre optionnel sont les suivantes :

- pour chaque bloc de données, le mot d'entrée est masqué par le mot de masquage ;
- pour au moins un bloc de données, le mot d'entrée est égal au mot de sortie déterminé pour le bloc de données précédent ;
- pour le premier bloc de données, le mot d'entrée est obtenu en fonction de données d'authentification et du multiplicateur ;
- le procédé comprend une étape de combinaison par ou exclusif d'une partie au moins des données d'authentification et du mot de masquage ;
- le code d'authentification est déterminé en fonction du mot de masquage et du mot de sortie obtenu pour le dernier bloc de données ;
- le mot d'entrée et/ou le mot de combinaison et/ou le mot de sortie et/ou le mot de masquage ont une longueur de 128 bits.

Selon une possibilité de mise en oeuvre (dont un exemple est décrit ci-après en référence à la figure 4), le procédé peut comprendre les étapes suivantes :

- détermination d'un mot de masquage additionnel initial ;
- mémorisation du mot de masquage additionnel initial dans un élément de mémorisation en tant que mot de masquage courant ;
- pour chaque bloc de données, lecture du mot de masquage courant dans l'élément de mémorisation, obtention d'un troisième produit par multiplication du mot de masquage courant par le multiplicateur, et mémorisation du troisième produit dans l'élément de mémorisation en tant que nouveau mot de masquage courant.

Selon cette possibilité où plusieurs masques sont utilisés, le mot de masquage est conservé tout au long du processus comme expliqué ci-dessus, tandis que le mot de masquage additionnel est mis à jour par multiplication.

Autrement dit, le procédé peut alors comprendre les étapes suivantes :

- détermination d'un premier ensemble de masque(s) et d'un second ensemble de masque(s), le premier ensemble comprenant le mot de masquage,
- pour chaque masque du premier ensemble, détermination d'un mot correctif associé égal à la combinaison par ou exclusif du masque concerné et d'un produit obtenu par multiplication du masque concerné par le multiplicateur.

Pour chaque bloc de données, le mot de sortie peut alors être déterminé au moyen d'une combinaison par ou exclusif du premier produit associé à ce bloc de données et des mots correctifs respectivement associés aux masques du premier ensemble. Le(s) masque(s) du premier ensemble peut (peuvent) ainsi être conservé(s) tout au long du procédé.

Le procédé peut alors comprendre par ailleurs, pour chaque détermination d'un mot de sortie, une étape de mise à jour de chacun des masques du second ensemble au moyen d'une multiplication par le multiplicateur.

Afin d'optimiser l'équilibre entre temps de traitement et sécurité, on peut prévoir par exemple que la différence entre le nombre de masque(s) du second ensemble et le nombre de masque(s) du premier ensemble est égale à 0 ou 1.

L'invention propose également un dispositif de traitement cryptographique comprenant un module de chiffrement conçu pour produire des données (par exemple des données chiffrées) comprenant une pluralité de blocs de données ordonnés, et un module d'authentification conçu pour produire un code d'authentification associé auxdites données, dans lequel le module d'authentification est conçu pour obtenir, pour chaque bloc de données, un mot de combinaison par combinaison par ou exclusif d'un mot d'entrée et du bloc de données concerné, et pour déterminer un mot de sortie en fonction d'un premier produit obtenu par multiplication du mot de combinaison par un multiplicateur, caractérisé en ce qu'il comprend une unité de détermination d'un mot de masquage et une unité de détermination d'un mot correctif égal à la combinaison par ou exclusif du mot de masquage et d'un second produit obtenu par multiplication du mot de masquage par le multiplicateur, et en ce que le module d'authentification est conçu pour déterminer, pour chaque bloc de données, le mot de sortie au moyen d'une combinaison par ou exclusif d'une pluralité de données incluant le premier produit associé à ce bloc de données et le mot correctif.

Les caractéristiques optionnelles présentées plus haut en termes de procédé peuvent éventuellement s'appliquer à un tel dispositif.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'une entité électronique au sein de laquelle est mise en oeuvre l'invention ;
- la figure 2 représente sous forme fonctionnelle des éléments de l'entité électronique de la figure 1 ;
- la figure 3 représente un premier exemple de procédé de production d'un code d'authentification conforme à l'invention ; et
- la figure 4 représente un second exemple de procédé de production d'un code d'authentification conforme à l'invention.

La figure 1 représente schématiquement les éléments principaux d'une entité électronique 1 au sein de laquelle est mise en oeuvre l'invention. Cette entité électronique est par exemple une carte à microcircuit, telle qu'une carte à circuit intégré universelle (ou UICC pour "*Universal Integrated Circuit Card*"). En variante, il pourrait s'agir d'un élément sécurisé (ou SE pour *"Secure Element*") - par exemple un microcontrôleur sécurisé ; un tel élément sécurisé est par exemple intégré à un dispositif électronique portatif (ou *"hand-held electronic device"* selon l'appellation anglo-saxonne), tel qu'un terminal de communication ou un passeport électronique. Selon une autre variante encore, l'entité électronique 1 pourrait être un ordinateur ou un module matériel de sécurité (ou HSM pour *"Hardware Security Module")*.

L'entité électronique 1 comprend un processeur 2 (ici un microprocesseur), une mémoire vive 4 et une mémoire non-volatile réinscriptible 6 (par exemple de type EEPROM pour "*Electrically Erasable and Programmable Read-Only Memory*"). L'entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au processeur 2 de sorte que le processeur 2 peut lire ou écrire des données dans chacune de ces mémoires.

Une de ces mémoires, par exemple la mémoire non-volatile réinscriptible 6, mémorise des instructions de programme d'ordinateur, dont certaines permettent la mise en oeuvre de l'un des procédés décrits ci-dessous en référence aux figures 3 et 4 lorsque ces instructions sont exécutées par le processeur 2.

Les mémoires 4, 6 stockent également des données représentatives de valeurs utilisées lors de la mise en oeuvre de ce procédé. La mémoire non-volatile réinscriptible 6 mémorise en particulier une clé cryptographique K (utilisée comme décrit plus bas).

Comme expliqué plus bas, l'entité électronique 1 est conçue (ici grâce à certaines des instructions mémorisées dans une mémoire 4, 6 de l'entité électronique 1 et exécutables par le processeur 2 de l'entité électronique) pour mettre en oeuvre un procédé de production d'un code d'authentification T (en anglais : "*authentication tag*") ; un tel procédé comprend ici au moins une étape de traitement cryptographique (telle qu'une étape de chiffrement d'un bloc de données $D_i$ par application d'un algorithme cryptographique de chiffrement utilisant la clé cryptographique K). L'entité électronique 1 est donc un dispositif de traitement cryptographique.

L'entité électronique 1 comprend en outre une interface de communication 8 avec des dispositifs électroniques externes. Dans le cas décrit ici où l'entité électronique 1 est une carte à microcircuit, l'interface de communication 8 comprend par exemple des contacts affleurant sur une face de la carte à microcircuit. En variante, l'interface de communication 8 pourrait être réalisée par un module de communication sans contact. De manière générale, l'interface de communication 8 peut être un module de communication (filaire ou sans fil) avec une autre entité électronique.

Dans certains modes de réalisation, le processeur 2 peut ainsi recevoir des données (ici des données d'authentification A formées de m blocs $A_i$ et/ou des données à chiffrer D formées de n blocs $D_i$) de l'autre entité électronique via l'interface de communication 8 et/ou émettre d'autres données (ici par exemple des données chiffrées C formées de n blocs $C_i$ et/ou le code d'authentification T produit comme expliqué ci-après) à destination de l'autre entité électronique via l'interface de communication 8.

On décrit ci-dessous des solutions pour chiffrer par bloc les données à chiffrer D et produire un code d'authentification T de ces données chiffrées C et de données d'authentification A (à seulement authentifier), ici conformément à l'algorithme GCM (pour *"Galois Counter Mode"*).

Les n blocs (ordonnés) $D_i$ de données à chiffrer D (ainsi que les n blocs ordonnées $C_i$ de données chiffrées C), les m blocs (ordonnés) $A_i$ de données d'authentification A et le code d'authentification T ont ici la même longueur (en bits), par exemple 128 bits dans le cadre de l'algorithme GCM.

La figure 2 représente sous forme fonctionnelle des éléments du dispositif de traitement cryptographique (ici l'entité électronique 1) conforme à l'invention.

Chaque élément (module ou unité) décrit ci-dessous est mis en oeuvre en pratique par la coopération d'éléments matériels et logiciels, ici par la mise en oeuvre de fonctionnalités par le processeur 2 du fait de l'exécution, par ce processeur 2, d'instructions de programme d'ordinateur mémorisées dans une mémoire de l'entité électronique 1 (par exemple la mémoire non-volatile réinscriptible 6). En variante, ces éléments pourraient être réalisés au sein d'un circuit intégré à application spécifique (ou ASIC pour *"Application Specific Integrated Circuit*").

L'entité électronique 1 comprend ainsi un module de chiffrement 10 et un module d'authentification 20.

Le module de chiffrement 10 est conçu pour appliquer un chiffrement par bloc aux blocs $D_i$ de données à chiffrer afin d'obtenir des blocs $C_i$ de données chiffrées).

Pour ce faire, le module de chiffrement 10 comprend un compteur 12, qui génère une valeur de compteur CNT, et une unité cryptographique 14, qui applique un algorithme cryptographique de chiffrement E à la valeur de compteur CNT courante.

L'algorithme cryptographique de chiffrement E utilisé ici est un algorithme de chiffrement de type AES utilisant la clé cryptographique K (mémorisée dans l'entité électronique 1 comme déjà indiqué).

La valeur produite en sortie de l'unité cryptographique 14 - valeur que l'on peut donc noter $E_K(CNT)$ - est appliquée en entrée d'un opérateur de ou exclusif 16, qui reçoit sur une autre entrée le bloc courant $D_i$ à chiffrer.

La valeur produite en sortie de l'opérateur de ou exclusif 16 (et ainsi en sortie du module de chiffrement 10) est le bloc de données chiffrées $C_i$ associé au bloc courant $D_i$ :

$$C_i = D_i \oplus E_K(CNT).$$

Le module d'authentification 20 est conçu pour produire le code d'authentification T déjà mentionné, ce code d'authentification T étant associé aux blocs de données chiffrées $C_i$ ainsi produits et aux blocs $A_i$ de données d'authentification.

Le module d'authentification 20 comprend une unité de sélection 22 qui sélectionne (selon l'étape du procédé de production du code d'authentification, comme décrit ci-après en référence à la figure 3) un bloc courant de données d'authentification $A_i$ ou le bloc courant de données chiffrées $C_i$.

Le bloc ainsi sélectionné et produit en sortie de l'unité de sélection 22 est noté $B_j$ dans la suite.

Le module d'authentification 20 comprend également une unité de détermination 28 conçue pour déterminer, ici par tirage aléatoire, un mot de masquage M. Le mot de masquage M a ici une longueur (en bits) identique à celle des blocs de données $D_i$, $A_i$, $C_i$ (soit 128 bits dans l'exemple décrit).

Comme expliqué dans la suite, le mot de masquage M permet de masquer les données manipulées au sein du module d'authentification 20 (chaque bloc de donnée manipulé $X_j$ étant masqué en combinant le bloc de données concerné et le mot de masquage M par une opération de ou exclusif $\oplus$). L'unité de détermination 28 produit donc un seul mot de masquage M au cours du procédé de production du code d'authentification (mot de masquage M qui est par exemple mémorisé dans la mémoire vive 4).

Le module d'authentification 20 comprend également un opérateur de ou exclusif 24 qui reçoit en entrée le bloc sélectionné $B_j$ (c'est-à-dire soit un bloc de données d'authentification $A_i$ soit un bloc de données chiffrées $C_i$ selon l'étape du procédé) et une donnée d'entrée $X_j$.

Comme cela ressortira de la présentation du procédé de production du code d'authentification en référence à la figure 3, la donnée d'entrée $X_j$ est égale au mot de masquage M lors de la première itération, et, lors des autres itérations, est égale à la valeur de sortie $X_{j+1}$ obtenue à l'itération précédente.

Le module d'authentification 20 comprend également un opérateur de multiplication 26 qui reçoit en entrée la valeur obtenue en sortie de l'opérateur de ou exclusif 24 (soit $X_j \oplus B_j$) et un multiplicateur H.

Dans l'exemple décrit ici, le multiplicateur H est égal à la valeur $E_K(0)$ obtenue par application de l'algorithme cryptographique de chiffrement E utilisant la clé cryptographique K à la valeur 0 (soit ici 128 bits de valeur nulle). Le multiplicateur H a donc une longueur en bits égale (notamment) à celle de chaque bloc $D_i$ de données à chiffrer (et donc égale à celle de chaque bloc $C_i$ de données chiffrées), ici une longueur de 128 bits.

Le multiplicateur H peut éventuellement en pratique être mémorisé au sein de l'entité électronique 1 (par exemple dans la mémoire non-volatile réinscriptible 6). En variante, le multiplicateur H peut être calculé à chaque utilisation au moyen de la clé cryptographique K (mémorisée quant à elle au sein de l'entité électronique 1).

L'opérateur de multiplication 26 effectue une multiplication dans le corps de Galois $GF(2^l)$ des valeurs reçues en entrée, soit l'opération $(X_j \oplus B_j)$. H, où l est la longueur (en bits) des blocs de données $D_i$, $A_i$, $C_i$ et "." le symbole représentant la multiplication dans le corps de Galois.

Dans l'exemple décrit ici, la multiplication est donc effectuée dans le corps de Galois $GF(2^{128})$. La structure de corps est par exemple construite sur la base du polynôme irréductible à coefficients dans le corps de Galois GF(2) :

$$x^{128} + x^7 + x^2 + x + 1.$$

Le module d'authentification 20 comprend en outre une unité de détermination 30 d'un mot correctif P égal à la combinaison par ou exclusif du mot de masquage H et du produit M.H obtenu par multiplication (dans le corps de Galois) du mot de masquage M par le multiplicateur H.

L'unité de détermination 30 comprend par exemple un opérateur de multiplication 32 qui reçoit en entrée le mot de masquage M et le multiplicateur H, et un opérateur de ou exclusif 34 qui reçoit en entrée le mot de masquage M et la sortie de l'opérateur de multiplication 32.

L'opérateur de ou exclusif 34 produit ainsi en sortie le mot correctif P :

$$P = M \oplus M.H .$$

Le module d'authentification 20 comprend enfin un opérateur de ou exclusif 36 qui reçoit en entrée le produit $(X_j \oplus B_j)$. H (généré par l'opérateur de multiplication 26) et le mot correctif P (généré par l'unité de détermination 30) afin de produire une donnée de sortie $X_{j+1}$ :

$$X_{j+1} = (X_j \oplus B_j) . H \oplus P.$$

Si on note $Y_j$ la donnée d'entrée (non-masquée) reçue en entrée à cette étape selon l'algorithme GCM (avec ainsi $X_j = Y_j \oplus M$), on a :

$$X_{j+1} = (Y_j \oplus B_j \oplus M) . H \oplus P = (Y_j \oplus B_j) . H \oplus M,$$

ce qui correspond à la valeur générée par cette étape selon l'algorithme GCM (valeur $(Y_j \oplus B_j)$. H) masquée par le mot de masquage M.

L'application du mot correctif P permet ainsi de conserver le masquage par le (même) mot de masquage M lors de la mise en oeuvre de l'algorithme GCM, malgré les opérations de multiplication utilisées lors des étapes de l'algorithme GCM.

Le module d'authentification 20 peut comprendre en outre une unité (non représentée) de production d'un code intermédiaire masqué $X_{m+n+1}$ conçu pour produire le code intermédiaire masqué $X_{m+n+1}$ en fonction notamment des données de sortie $X_{m+n}$ (produites lors de la dernière itération de l'étape E22 décrite ci-après) et du mot correctif P, par exemple conformément à l'étape E28 décrite plus bas.

Le module d'authentification 20 peut également comprendre une unité (non représentée) de production du code d'authentification T conçue pour effectuer un démasquage du code intermédiaire masqué $X_{m+n+1}$, ici en appliquant le mot de masquage M au code intermédiaire masqué $X_{m+n+1}$ au moyen d'une opération de ou exclusif, et une combinaison par ou exclusif avec la valeur $E_K(CNT_0)$ conformément à l'algorithme GCM (comme prévu à l'étape E30 décrite ci-dessous).

La figure 3 représente un premier exemple de procédé de production d'un code d'authentification T conforme à l'invention. Un tel procédé peut par exemple être mis en oeuvre au moyen des éléments fonctionnels de la figure 2.

Ce procédé débute à l'étape E2 à laquelle le processeur 2 initialise le multiplicateur H à la valeur $E_K(0)$ comme indiqué plus haut, la première donnée d'entrée $X_0$ (donnée d'entrée de la première itération de l'étape E10) à la valeur 0 (soit ici 128 bits de valeur nulle) et le compteur CNT à une valeur donnée (par exemple une valeur reçue au préalable d'une entité électronique externe via l'interface de communication 8). Dans le cas décrit ici où l'algorithme cryptographique de chiffrement E utilisé est un algorithme de chiffrement de type AES utilisant la clé cryptographique K, l'initialisation du compteur CNT peut être réalisée conformément au § 7.1 du document NIST SP800-38D.

L'étape E2 comprend ici en outre la mémorisation de la valeur courante (valeur initiale) du compteur CNT au sein d'une variable $CNT_0$.

Comme déjà indiqué, le multiplicateur H pourrait en variante être mémorisé dans la mémoire non-volatile 6 (auquel cas il n'est pas initialisé à l'étape E2 mais seulement lu dans la mémoire non-volatile 6).

Le processeur 2 détermine alors à l'étape E4 le mot de masquage M, ici par tirage aléatoire. En variante, le processeur 2 pourrait par exemple obtenir le mot de masquage M par coopération avec un crypto-processeur lié au processeur 2.

Le processeur 2 peut ainsi effectuer à l'étape E6 les traitements suivants impliquant le mot de masquage M :

- la première donnée d'entrée $X_0$ est masquée par combinaison avec le mot de masquage M (au moyen d'une opération de ou exclusif), c'est-à-dire en pratique que le processeur calcule $X_0 \oplus M$ et mémorise le résultat dans la variable $X_0$ avec écrasement ;
- le processeur 2 détermine le mot correctif $P = M \oplus M.H$ (où "." représente la multiplication dans le corps de Galois $GF(2^{128})$, voir plus haut à ce sujet les explications relatives à l'opérateur de multiplication 26 et à l'unité de détermination 30).

Le processeur 2 initialise alors à 1 l'indice courant i (étape E8).

Le processeur 2 détermine alors la donnée de sortie $X_i$ (relative à l'itération courante) comme suit (étape E10) :

$$X_i = (X_{i-1} \oplus A_i) . H \oplus P ,$$

où l'on rappelle que $A_i$ est le bloc (ordonné) d'indice i parmi les données d'authentification et $X_{i-1}$ est la donnée d'entrée à l'itération courante (qui correspond à la variable $X_0$ déjà mentionnée pour i = 1 - première itération - et à la donnée de sortie de l'itération précédente pour i > 1).

Ainsi par exemple, lors de la première itération de l'étape E10 (pour i=1) et lorsque la première donnée d'entrée $X_0$ est initialisée à la valeur nulle et masquée par le mot de masquage M comme indiqué ci-dessus, la donnée de sortie $X_1$ vaut $(M \oplus A_1)$. $H \oplus P$. La première itération de l'étape E10 met donc en oeuvre dans ce cas une étape de combinaison par ou exclusif d'une partie $A_1$ des données d'authentification A et du mot de masquage M.

La donnée d'entrée $X_{i-1}$ étant masquée au moyen du mot de masquage M, on retrouve bien le fonctionnement recherché dans le cadre de l'algorithme GCM, avec masquage par le mot de masquage M :

$$X_i = (X_{i-1} \oplus M \oplus A_i) . H \oplus M.H \oplus P = (X_{i-1} \oplus M \oplus A_i) . H \oplus M,$$

soit

$$X_i \oplus M = (X_{i-1} \oplus M \oplus A_i) . H$$

($X_{i-1} \oplus M$ et $X_i \oplus M$ étant les valeurs normalement manipulées pour mettre en oeuvre l'algorithme GCM, sans masquage, et qui vérifient donc bien la relation voulue par l'algorithme GCM).

Le processeur 2 incrémente ensuite l'indice courant i (étape E12).

Le processeur 2 détermine alors à l'étape E14 si le nouvel indice courant i est supérieur au nombre m de blocs $A_i$ de données d'authentification.

Dans l'affirmative (cas de détermination positive illustré par la flèche P), l'ensemble de ces blocs $A_i$ ont été traitées et le processeur 2 poursuit son fonctionnement à l'étape E16 décrite plus bas.

Dans la négative (cas de détermination négative illustré par la flèche N), le procédé boucle à l'étape E10 décrite plus haut pour traitement du nouveau bloc courant $A_i$.

A l'étape E16, le processeur 2 réinitialise l'indice i à la valeur 1.

Le processeur 2 incrémente ensuite le compteur CNT (étape E18).

En utilisant la nouvelle valeur du compteur CNT, le processeur 2 détermine à l'étape E20 le bloc $C_i$ de données chiffrées (bloc d'indice i) associé au bloc $D_i$ de données à chiffrer (bloc d'indice i) comme suit :

$$C_i = D_i \oplus E_K(CNT).$$

Ce traitement est par exemple mis en oeuvre au moyen du module de chiffrement 10 décrit plus haut. (On pourra se référer à la description du module de chiffrement 10 en référence à la figure 2 pour plus de détails sur les opérations effectuées.)

Le processeur 2 peut alors déterminer à l'étape E22 la donnée de sortie $X_{m+i}$ (relative à l'itération courante) comme suit :

$$X_{m+i} = (X_{m+i-1} \oplus C_i) . H \oplus P ,$$

où $X_{m+i-1}$ est la donnée d'entrée à l'itération courante (qui correspond, pour i = 1, à la donnée de sortie $X_m$ de la dernière itération de l'étape E10 et, pour i > 1, à la donnée de sortie de l'itération précédente).

La donnée d'entrée $X_{m+i-1}$ étant masquée au moyen du mot de masquage M, on retrouve bien le fonctionnement recherché dans le cadre de l'algorithme GCM, avec masquage par le mot de masquage M :

$$X_{m+i} = (X_{m+i-1} \oplus M \oplus C_i) . H \oplus M.H \oplus P = (X_{m+i-1} \oplus M \oplus C_i) . H \oplus M,$$

soit

$$X_{m+i} \oplus M = (X_{m+i-1} \oplus M \oplus C_i) . H$$

($X_{m+i-1} \oplus M$ et $X_{m+i} \oplus M$ étant les valeurs normalement manipulées pour mettre en oeuvre l'algorithme GCM, sans masquage, et qui vérifient donc bien la relation voulue par l'algorithme GCM).

Le processeur 2 incrémente ensuite l'indice courant i (étape E24).

Le processeur 2 détermine alors à l'étape E26 si le nouvel indice courant i est supérieur au nombre n de blocs $C_i$ de données chiffrées (égal au nombre de blocs $D_i$ de données à chiffrer).

Dans l'affirmative (cas de détermination positive illustré par la flèche P), l'ensemble des blocs $C_i$ de données chiffrées ont été traitées et le processeur 2 poursuit son fonctionnement à l'étape E28 décrite plus bas.

Dans la négative (cas de détermination négative illustré par la flèche N), le procédé boucle à l'étape E18 décrite plus haut pour traitement du nouveau bloc courant $D_i$.

A l'étape E28, le processeur 2 détermine le code intermédiaire masqué $X_{m+n+1}$ comme suit :

$$X_{m+n+1} = [X_{m+n} \oplus (l_A \| l_C)] . H \oplus P,$$

où $X_{m+n}$ est la donnée de sortie produite à la dernière itération de l'étape E22 (itération où i = n à l'étape E22), $l_A$ est la longueur en bits des données A d'authentification (soit 128*m) codée sur 64 bits, $l_C$ est la longueur en bits des données chiffrées C (soit 128*n) codée sur 64 bits et "||" est l'opérateur de concaténation.

Ici encore, la donnée de sortie $X_{m+n}$ étant masquée au moyen du mot de masquage M, on retrouve bien le fonctionnement recherché dans le cadre de l'algorithme GCM, avec masquage par le mot de masquage M :

$$X_{m+n+1} = (X_{m+n} \oplus M \oplus (l_A \| l_C)) . H \oplus M.H \oplus P,$$

soit

$$X_{m+n+1} \oplus M = (X_{m+n} \oplus M \oplus (l_A \| l_C)) . H$$

($X_{m+n} \oplus M$ et $X_{m+n+1} \oplus M$ étant les valeurs normalement manipulées pour mettre en oeuvre l'algorithme GCM, sans masquage, et qui vérifient donc bien la relation voulue par l'algorithme GCM).

Le processeur 2 peut alors déterminer le code d'authentification T (étape E30) en démasquant la valeur $X_{m+n+1}$ obtenue à l'étape E28, c'est-à-dire en appliquant le mot de masquage M à la valeur $X_{m+n+1}$ au moyen d'une opération de ou exclusif, et en appliquant ici également la valeur $E_K(CNT_0)$ au moyen d'une opération de ou exclusif (comme prévu par l'algorithme GCM) :

$$T = X_{m+n+1} \oplus M \oplus E_K(CNT_0).$$

En effet, comme déjà expliqué, l'application du mot correctif P au moyen d'une opération de ou exclusif aux étapes E10, E22 et E28 a permis de conserver un mot de masquage M constant tout au long du procédé, malgré l'utilisation d'une multiplication dans le corps de Galois lors de ces étapes.

La figure 4 représente un second exemple de procédé de production d'un code d'authentification conforme à l'invention.

Ce second exemple diffère du premier exemple par l'utilisation d'un masquage d'ordre t (au moyen de t masques), comme expliqué ci-après.

Ce procédé débute par une étape E52 (identique à l'étape E2 décrite en référence à la figure 3) à laquelle le processeur 2 initialise le multiplicateur H à la valeur $E_K(0)$, la première donnée d'entrée $X_0$ (donnée d'entrée de la première itération de l'étape E60) à la valeur 0 (soit ici 128 bits de valeur nulle) et le compteur CNT à une valeur donnée (par exemple une valeur reçue au préalable d'une entité électronique externe via l'interface de communication 8).

L'étape E52 comprend ici en outre la mémorisation de la valeur courante (valeur initiale) du compteur CNT au sein d'une variable $CNT_0$.

Le processeur 2 détermine alors à l'étape E54 une pluralité de t masques $M_1, ..., M_t$ ici par tirage aléatoire (t étant de préférence impair, par exemple égal à 3). Afin de garantir un masquage d'ordre supérieur, chaque masque $M_j$ est déterminé par tirage aléatoire indépendamment des autres masques.

Parmi ces t masques $M_1, ..., M_t$, on distingue dans la suite un premier ensemble de masques $M_{k+1}, ..., M_t$ (comprenant t-k masque(s)) et un second ensemble de masques $M_1, ..., M_k$ (comprenant k masque(s)), avec $0 < k < t$ (k étant de préférence supérieur ou égal au quotient entier de la division t/2).

Le premier ensemble de masques peut ainsi comprendre un masque $M_{k+1}$ ou une pluralité de masques $M_{k+1}, ..., M_t$. De même, le second ensemble de masques peut comprendre un masque $M_1$ ou une pluralité de masques $M_1, ..., M_k$.

On décrit dans la suite un exemple où chacun des premier et second ensembles comprend une pluralité de masques.

Le processeur 2 peut ainsi effectuer à l'étape E56 les traitements suivants impliquant les masques $M_j$ :

- la première donnée d'entrée $X_0$ est masquée par combinaisons successives (au moyen d'une opération de ou exclusif) avec chacun des masques $M_j$, c'est-à-dire en pratique que le processeur calcule $X_0 \oplus M_1 \oplus ... \oplus M_t$ et mémorise le résultat dans la variable $X_0$ avec écrasement ;
- le processeur 2 détermine des mots correctifs $P_j$ pour les masques $M_j$ du premier ensemble (c'est-à-dire d'indice j compris entre k+1 et t) comme suit :
  $P_j = M_j \oplus M_j.H$ (où "." représente la multiplication dans le corps de Galois GF($2^{128}$), voir plus haut à ce sujet les explications relatives à l'opérateur de multiplication 26 et à l'unité de détermination 30).

Le processeur 2 initialise alors à 1 l'indice courant i (étape E58).

Le processeur 2 détermine alors la donnée de sortie $X_i$ (relative à l'itération courante) comme suit (étape E60) :

$$X_i = (X_{i-1} \oplus A_i) . H \oplus P_{k+1} \oplus ... \oplus P_t,$$

où l'on rappelle que $A_i$ est le bloc (ordonné) d'indice i parmi les données d'authentification et $X_{i-1}$ est la donnée d'entrée à l'itération courante (qui correspond à la variable $X_0$ déjà mentionnée pour i = 1 - première itération - et à la donnée de sortie de l'itération précédente pour i > 1).

Lors de cette étape, l'application des mots correctifs $P_{k+1}$, ..., $P_t$ pour les masques $M_{k+1}$, ..., $M_t$ du premier ensemble permet de maintenir inchangés ces masques (malgré la multiplication effectuée), comme expliqué plus haut (voir notamment l'étape E10).

Les masques $M_1$, ..., $M_k$ du seconde ensemble ne sont en revanche pas concernés et l'étape E60 comprend ainsi également une étape de mise à jour de chacun des masques $M_1$, ..., $M_k$ du second ensemble en multipliant chacun de ces masques par le multiplicateur H.

Le processeur 2 incrémente ensuite l'indice courant i (étape E62).

Le processeur 2 détermine alors à l'étape E64 si le nouvel indice courant i est supérieur au nombre m de blocs $A_i$ de données d'authentification.

Dans l'affirmative (cas de détermination positive illustré par la flèche P), l'ensemble de ces blocs $A_i$ ont été traitées et le processeur 2 poursuit son fonctionnement à l'étape E66 décrite plus bas.

Dans la négative (cas de détermination négative illustré par la flèche N), le procédé boucle à l'étape E60 décrite ci-dessus pour traitement du nouveau bloc courant $A_i$.

A l'étape E66, le processeur 2 réinitialise l'indice i à la valeur 1.

Le processeur 2 incrémente ensuite le compteur CNT (étape E68).

En utilisant la nouvelle valeur du compteur CNT, le processeur 2 détermine à l'étape E70 le bloc $C_i$ de données chiffrées (bloc d'indice i) associé au bloc $D_i$ de données à chiffrer (bloc d'indice i) comme suit :

$$C_i = D_i \oplus E_K(CNT).$$

Ce traitement est par exemple mis en oeuvre au moyen du module de chiffrement 10 décrit plus haut. (On pourra se référer à la description du module de chiffrement 10 en référence à la figure 2 pour plus de détails sur les opérations effectuées.)

Le processeur 2 peut alors déterminer à l'étape E72 la donnée de sortie $X_{m+i}$ (relative à l'itération courante) comme suit :

$$X_{m+i} = (X_{m+i-1} \oplus C_i) . H \oplus P_{k+1} \oplus ... \oplus P_t,$$

où $X_{m+i-1}$ est la donnée d'entrée à l'itération courante (qui correspond, pour i = 1, à la donnée de sortie $X_m$ de la dernière itération de l'étape E60 et, pour i > 1, à la donnée de sortie de l'itération précédente).

Comme pour l'étape E60 décrite plus haut, l'application des mots correctifs $P_{k+1}$, ..., $P_t$ pour les masques $M_{k+1}$, ..., $M_t$ du premier ensemble permet de maintenir inchangés ces masques (malgré la multiplication effectuée).

Les masques $M_1$, ..., $M_k$ du second ensemble ne sont en revanche pas concernés et l'étape E72 comprend ainsi également une étape de mise à jour de chacun des masques $M_1$, ..., $M_k$ du second ensemble en multipliant chacun de ces masques par le multiplicateur H.

Le processeur 2 incrémente ensuite l'indice courant i (étape E74).

Le processeur 2 détermine alors à l'étape E76 si le nouvel indice courant i est supérieur au nombre n de blocs $C_i$ de données chiffrées (égal au nombre de blocs $D_i$ de données à chiffrer).

Dans l'affirmative (cas de détermination positive illustré par la flèche P), l'ensemble des blocs $C_i$ de données chiffrées ont été traitées et le processeur 2 poursuit son fonctionnement à l'étape E78 décrite plus bas.

Dans la négative (cas de détermination négative illustré par la flèche N), le procédé boucle à l'étape E68 décrite plus haut pour traitement du nouveau bloc courant $D_i$.

A l'étape E78, le processeur 2 détermine le code intermédiaire masqué $X_{m+n+1}$ comme suit :

$$X_{m+n+1} = [X_{m+n} \oplus (l_A \,||\, l_C)] \,.\, H \oplus P_{k+1} \oplus \ldots \oplus P_t,$$

où $X_{m+n}$ est la donnée de sortie produite à la dernière itération de l'étape E72 (itération où i = n à l'étape E72), $l_A$ est la longueur en bits des données A d'authentification (soit 128*m) codée sur 64 bits, $l_C$ est la longueur en bits des données chiffrées C (soit 128*n) codée sur 64 bits et "||" est l'opérateur de concaténation.

Ici encore, l'application des mots correctifs $P_{k+1}$, ..., $P_t$ pour les masques $M_{k+1}$, ..., $M_t$ du premier ensemble permet de maintenir inchangés ces masques (malgré la multiplication effectuée).

Les masques $M_1$, ..., $M_k$ du second ensemble ne sont en revanche pas concernés et l'étape E78 comprend ainsi également une étape de mise à jour de chacun des masques $M_1$, ..., $M_k$ du second ensemble en multipliant chacun de ces masques par le multiplicateur H.

Le processeur 2 peut alors déterminer le code d'authentification T (étape E80) en démasquant la valeur $X_{m+n+1}$ obtenue à l'étape E78, c'est-à-dire en appliquant successivement (au moyen d'une opération de ou exclusif) chacun des masques $M_1$, ..., $M_t$ à la valeur $X_{m+n+1}$, et en appliquant ici également la valeur $E_K(CNT_0)$ au moyen d'une opération de ou exclusif (comme prévu par l'algorithme GCM) :

$$T = X_{m+n+1} \oplus M_1 \oplus \ldots \oplus M_t \oplus E_K(CNT_0).$$

## Revendications

1. Procédé de production d'un code d'authentification (T) associé à des données comprenant une pluralité de blocs de données ordonnés ($C_i$), dans lequel, pour chaque bloc de données ($C_i$), un mot de sortie ($X_{m+i}$) est déterminé en fonction d'un premier produit obtenu par multiplication d'un mot de combinaison ($x_{m+i-1} \oplus C_i$) par un multiplicateur (H), le mot de combinaison étant obtenu par combinaison par ou exclusif d'un mot d'entrée ($X_{m+i-1}$) et du bloc de données concerné ($C_i$),
**caractérisé en ce qu'**il comprend une étape (E4 ; E54) de détermination d'un mot de masquage (M ; $M_t$) et une étape (E6 ; E56) de détermination d'un mot correctif (P ; $P_t$) égal à la combinaison par ou exclusif du mot de masquage (M ; $M_t$) et d'un second produit (M.H ; $M_t$.H) obtenu par multiplication du mot de masquage (M ; $M_t$) par le multiplicateur (H), et
**en ce que**, pour chaque bloc de données ($C_i$), le mot de sortie ($X_{m+i}$) est déterminé au moyen d'une combinaison par ou exclusif d'une pluralité de données incluant le premier produit associé à ce bloc de données ($C_i$) et le mot correctif (P ; $P_t$).

2. Procédé selon la revendication 1, dans lequel, pour chaque bloc de données ($C_i$), le mot d'entrée ($X_{m+i-1}$) est masqué par le mot de masquage (M ; $M_t$).

3. Procédé selon la revendication 1 ou 2, dans lequel, pour au moins un bloc de données, le mot d'entrée est égal au mot de sortie déterminé pour le bloc de données précédent.

4. Procédé selon l'une des revendications 1 à 3, dans lequel, pour le premier bloc de données ($C_1$), le mot d'entrée ($X_m$) est obtenu en fonction de données d'authentification (A) et du multiplicateur (H).

5. Procédé selon la revendication 4, comprenant une étape de combinaison par ou exclusif d'une partie au moins ($A_1$) des données d'authentification (A) et du mot de masquage (M ; $M_t$).

6. Procédé selon l'une des revendications 1 à 5, dans lequel le code d'authentification est déterminé en fonction du mot de masquage (M ; $M_t$) et du mot de sortie ($X_{m+n}$) obtenu pour le dernier bloc de données ($C_n$).

7. Procédé selon l'une des revendications 1 à 6, comprenant les étapes suivantes :

- détermination (E54) d'un mot de masquage additionnel initial ($M_1$) ;
- mémorisation du mot de masquage additionnel initial ($M_1$) dans un élément de mémorisation en tant que mot de masquage courant ;
- pour chaque bloc de données ($C_i$), lecture du mot de masquage courant ($M_1$) dans l'élément de mémorisation, obtention d'un troisième produit ($M_1$.H) par multiplication du mot de masquage courant ($M_1$) par le multiplicateur (H), et mémorisation du troisième produit ($M_1$.H) dans l'élément de mémorisation (E72) en tant que nouveau mot de masquage courant.

**8.** Procédé selon l'une des revendications 1 à 6, comprenant les étapes suivantes :

- détermination (E54) d'un premier ensemble de masque(s) ($M_{k+1}$, $M_t$) et d'un second ensemble de masque(s) ($M_1$, $M_k$), le premier ensemble comprenant le mot de masquage ($M_t$),
- pour chaque masque ($M_{k+1}$, $M_t$) du premier ensemble, détermination (E56) d'un mot correctif associé ($P_{k+1}$ ; $P_t$) égal à la combinaison par ou exclusif du masque concerné ($M_{k+1}$ ; $M_t$) et d'un produit ($M_{k+1}$.H ; $M_t$.H) obtenu par multiplication du masque concerné ($M_{k+1}$ ; $M_t$) par le multiplicateur (H),

dans lequel, pour chaque bloc de données ($C_i$), le mot de sortie ($X_{m+i}$) est déterminé au moyen d'une combinaison par ou exclusif du premier produit associé à ce bloc de données ($C_i$) et des mots correctifs ($P_{k+1}$, $P_t$) respectivement associés aux masques ($M_{k+1}$, $M_t$) du premier ensemble,
le procédé comprenant, pour chaque détermination d'un mot de sortie ($X_{m+i}$), une étape (E72) de mise à jour de chacun des masques du second ensemble au moyen d'une multiplication par le multiplicateur (H).

**9.** Procédé selon la revendication 8, dans lequel la différence entre le nombre de masque(s) du second ensemble et le nombre de masque(s) du premier ensemble est égale à 0 ou 1.

**10.** Procédé selon l'une des revendications 1 à 9, dans lequel le mot d'entrée, le mot de combinaison, le mot de sortie et le mot de masquage ont une longueur de 128 bits.

**11.** Dispositif de traitement cryptographique (1) comprenant un module de chiffrement (10) conçu pour produire des données comprenant une pluralité de blocs de données ordonnés ($C_i$), et un module d'authentification (20) conçu pour produire un code d'authentification (T) associé auxdites données, dans lequel le module d'authentification (20) est conçu pour obtenir, pour chaque bloc de données ($C_i$), un mot de combinaison par combinaison par ou exclusif d'un mot d'entrée ($X_j$) et du bloc de données concerné ($C_i$), et pour déterminer un mot de sortie ($X_{j+1}$) en fonction d'un premier produit obtenu par multiplication du mot de combinaison par un multiplicateur (H),
**caractérisé en ce qu'**il comprend une unité (28) de détermination d'un mot de masquage (M) et une unité (30) de détermination d'un mot correctif (P ; $P_t$) égal à la combinaison par ou exclusif du mot de masquage (M ; $M_t$) et d'un second produit obtenu par multiplication du mot de masquage (M ; $M_t$) par le multiplicateur (H), et
**en ce que** le module d'authentification (20) est conçu pour déterminer, pour chaque bloc de données ($C_i$), le mot de sortie ($X_{j+1}$) au moyen d'une combinaison par ou exclusif d'une pluralité de données incluant le premier produit associé à ce bloc de données ($C_i$) et le mot correctif (P ; $P_t$).

Fig.1

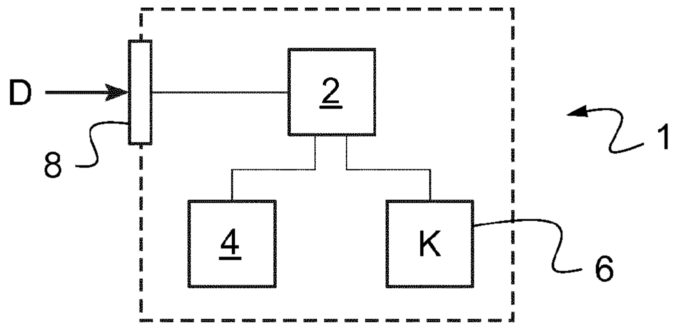
D
8
2
4
K
6
1

Fig.2

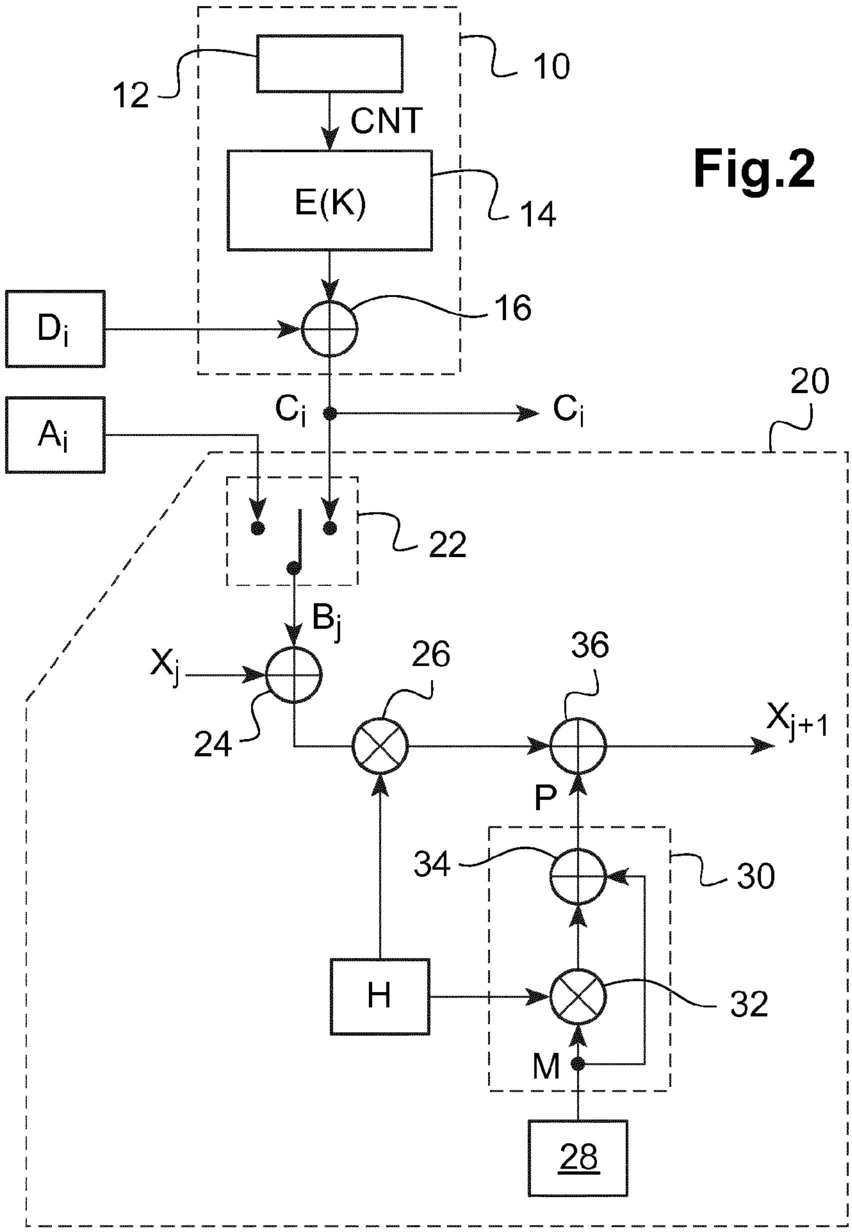
10
12
CNT
E(K)
14
16
$D_i$
$A_i$
$C_i$
$C_i$
20
22
$B_j$
$X_j$
24
26
36
$X_{j+1}$
P
34
30
H
32
M
28

Fig.3

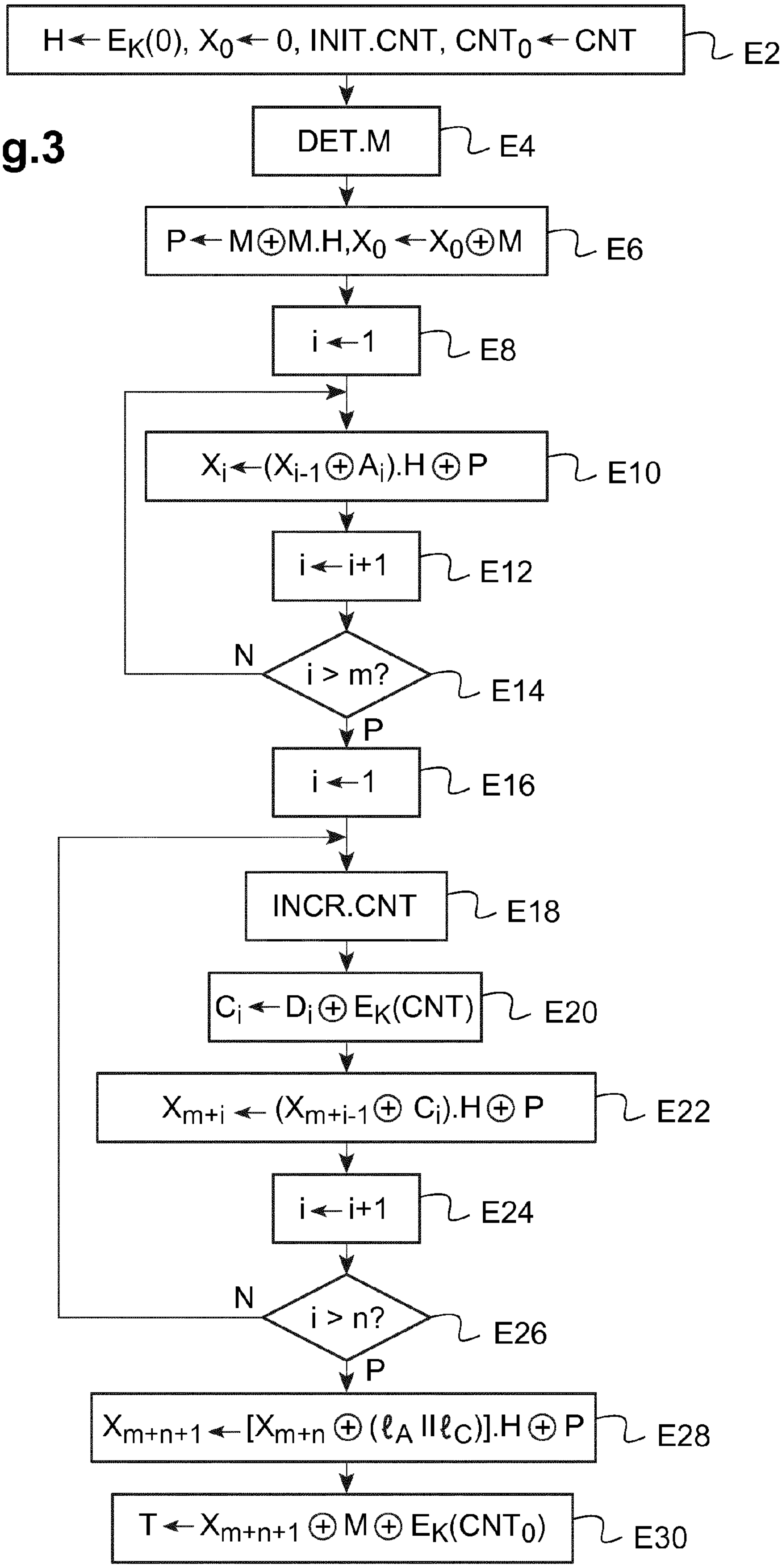
H ← E_K(0), X_0 ← 0, INIT.CNT, CNT_0 ← CNT
E2
DET.M
E4
P ← M⊕M.H, X_0 ← X_0⊕M
E6
i ← 1
E8
X_i ← (X_{i-1} ⊕ A_i).H ⊕ P
E10
i ← i+1
E12
N
i > m?
E14
P
i ← 1
E16
INCR.CNT
E18
C_i ← D_i ⊕ E_K(CNT)
E20
X_{m+i} ← (X_{m+i-1} ⊕ C_i).H ⊕ P
E22
i ← i+1
E24
N
i > n?
E26
P
X_{m+n+1} ← [X_{m+n} ⊕ (ℓ_A II ℓ_C)].H ⊕ P
E28
T ← X_{m+n+1} ⊕ M ⊕ E_K(CNT_0)
E30

Fig.4

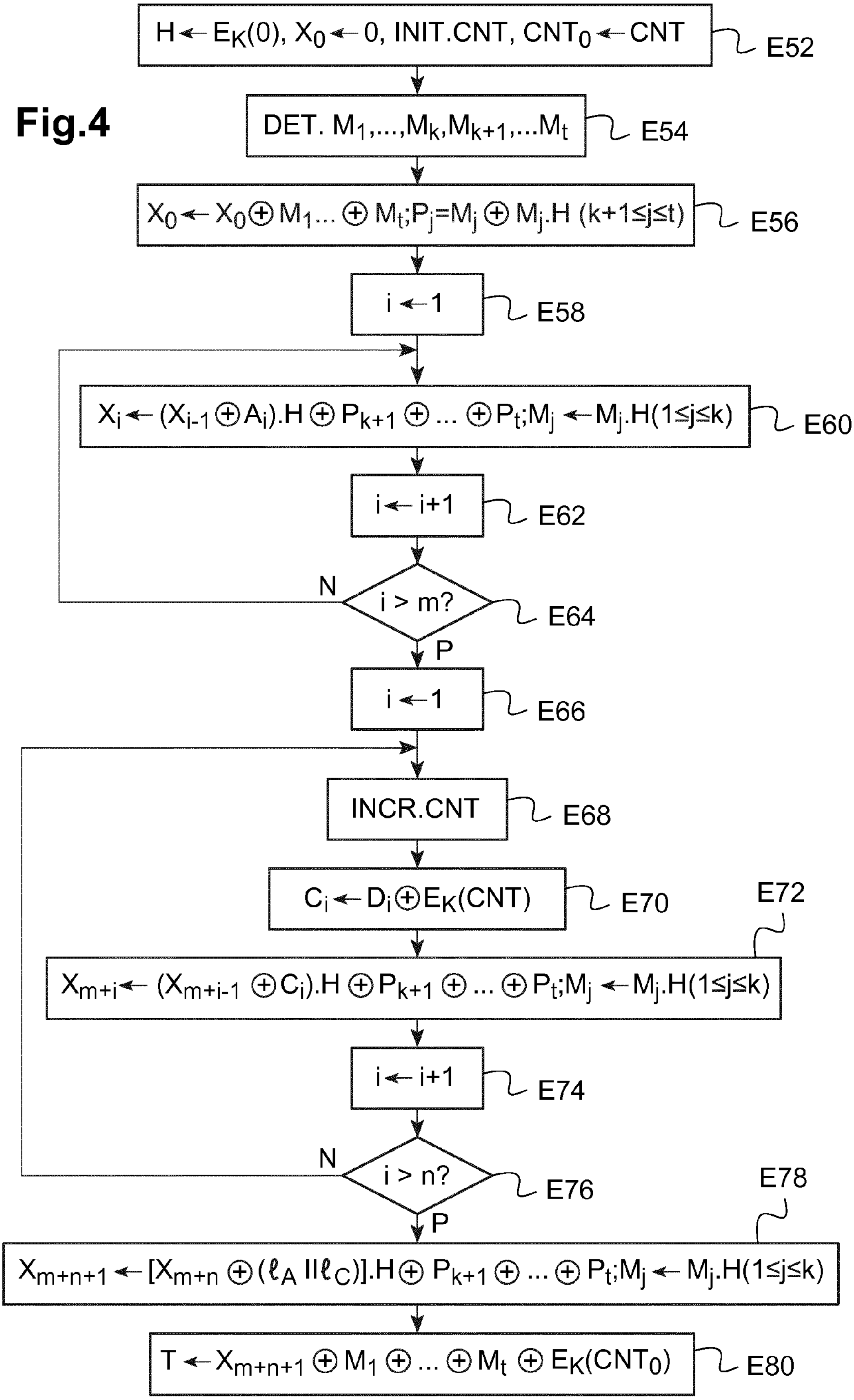
$H \leftarrow E_K(0)$, $X_0 \leftarrow 0$, INIT.CNT, $CNT_0 \leftarrow CNT$
E52
DET. $M_1,\ldots,M_k,M_{k+1},\ldots M_t$
E54
$X_0 \leftarrow X_0 \oplus M_1 \ldots \oplus M_t; P_j = M_j \oplus M_j.H\ (k+1 \leq j \leq t)$
E56
$i \leftarrow 1$
E58
$X_i \leftarrow (X_{i-1} \oplus A_i).H \oplus P_{k+1} \oplus \ldots \oplus P_t; M_j \leftarrow M_j.H(1 \leq j \leq k)$
E60
$i \leftarrow i+1$
E62
N
i > m?
E64
P
$i \leftarrow 1$
E66
INCR.CNT
E68
$C_i \leftarrow D_i \oplus E_K(CNT)$
E70
E72
$X_{m+i} \leftarrow (X_{m+i-1} \oplus C_i).H \oplus P_{k+1} \oplus \ldots \oplus P_t; M_j \leftarrow M_j.H(1 \leq j \leq k)$
$i \leftarrow i+1$
E74
N
i > n?
E76
P
E78
$X_{m+n+1} \leftarrow [X_{m+n} \oplus (\ell_A \| \ell_C)].H \oplus P_{k+1} \oplus \ldots \oplus P_t; M_j \leftarrow M_j.H(1 \leq j \leq k)$
$T \leftarrow X_{m+n+1} \oplus M_1 \oplus \ldots \oplus M_t \oplus E_K(CNT_0)$
E80

Europäisches Patentamt
European Patent Office
Office européen des brevets

# RAPPORT DE RECHERCHE EUROPEENNE

Numéro de la demande
EP 19 19 7584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | OSHIDA HIROKAZU ET AL: "On Masked Galois-Field Multiplication for Authenticated Encryption Resistant to Side Channel Analysis", 11 avril 2018 (2018-04-11), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 44 - 57, XP047472144, ISBN: 978-3-642-17318-9 [extrait le 2018-04-11] * section 3; figure 2 * | 1-11 | INV. H04L9/00 H04L9/06 H04L9/32 |
| X | WO 2018/118569 A1 (CRYPTOGRAPHY RES INC [US]) 28 juin 2018 (2018-06-28) * alinéas [0030] - [0040] * | 1-11 | |
| X | US 2018/034628 A1 (TRICHINA ELENA [FR] ET AL) 1 février 2018 (2018-02-01) * pages 3-5 * | 1-11 | DOMAINES TECHNIQUES RECHERCHES (IPC): H04L |

1 Le présent rapport a été établi pour toutes les revendications

| Lieu de la recherche | Date d'achèvement de la recherche | Examinateur |
|---|---|---|
| Munich | 18 octobre 2019 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 19 19 7584

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2019

| Document brevet cité au rapport de recherche | Date de publication | Membre(s) de la famille de brevet(s) | Date de publication |
|---|---|---|---|
| WO 2018118569 A1 | 28-06-2018 | CN 109791517 A | 21-05-2019 |
| | | EP 3559811 A1 | 30-10-2019 |
| | | WO 2018118569 A1 | 28-06-2018 |
| US 2018034628 A1 | 01-02-2018 | AUCUN | |

EPO FORM P0460

Pour tout renseignement concernant cette annexe : voir Journal Officiel de l'Office européen des brevets, No.12/82